# EUROPEAN PATENT SPECIFICATION

(11) **EP 2 942 324 B1**
(45) Date of publication and mention of the grant of the patent: **10.01.2018**
(21) Application number: 14813650.0
(22) Date of filing: 04.05.2014
(51) Int. Cl.: C01B 32/00, B01D 3/14, C01B 32/80

(54) **CARBONYL FLUORIDE PURIFICATION METHOD**
CARBONYLFLUORIDREINIGUNGSVERFAHREN
PROCÉDÉ DE PURIFICATION DE FLUORURE DE CARBONYLE

(30) Priority: 17.06.2013 CN 201310239401
(43) Date of publication of application: 11.11.2015
(73) Proprietor: Purification Equipment Research Institute of CSIC, Hebei 056027 (CN)
(72) Inventor: JIANG, Yugui, Hebei 056027 (CN); JI, Yanzhi, Hebei 056027 (CN); XU, Haiyun, Hebei 056027 (CN); SHA, Ting, Hebei 056027 (CN); GUO, Xutao, Hebei 056027 (CN); JI, Zhenhong, Hebei 056027 (CN)
(74) Representative: Hirsch & Associés
(86) International application number: PCT/CN2014/076716
(87) International publication number: WO 2014/201916

(56) References cited:
- EP-A2- 0 854 335
- WO-A1-2005/051841
- CN-A- 1 976 873
- CN-A- 102 171 138
- CN-A- 103 303 894
- JP-A- 2005 154 203
- JP-A- 2011 016 686
- TW-A- 200 422 283
- US-A- 3 253 029

## Description

### FIELD OF THE INVENTION

The present invention relates to a process for the purification of carbonyl fluoride, and belongs to the technical fields of fluorochemical industry and gas for electronic industry.

### BACKGROUND OF THE INVENTION

Currently, gases represented by perfluorohydrocarbon, such as perfluorocarbon (PFC) or nitrogen trifluoride (NF₃), are generally used as conventional etching gas and cleaning gas in the manufacturing devices for semiconductors and the manufacturing procedure for liquid crystals. However, the aforementioned conventional gases typically have relatively high Global Warming Potential (GWP) value, which all belong to greenhouse gases. Thus, there is a need to develop alternative products with low GWP value, in order to reduce the greenhouse effect.

Carbonyl fluoride (COF₂), also known as carbonyl difluoride and fluorophosgene, has good cleaning property and relatively low GWP value, with the cleaning effect thereof comparable with perfluorocarbon and nitrogen trifluoride. The carbonyl fluoride decomposes to generate carbon dioxide (CO₂) in the presence of water, and can rapidly break down in the atmosphere. It has a GWP value over 100 years of only about 0.7, even though considering the generated CO₂. Therefore, the carbonyl fluoride has a significantly weakened greenhouse effect as compared with the conventional cleaning gases. Furthermore, since the carbonyl fluoride decomposes to generate CO₂ in the presence of water, the residual carbonyl fluoride in industrial applications can be easily removed by water washing machine, without requiring for exhaust gas removing device for perfluorocarbon and nitrogen trifluoride, thereby to reduce the energy consumption during the manufacturing procedure. Application of the carbonyl fluoride in the liquid crystal industry has been reported (Japanese Economic Industry News "Cleaning gas COF2 for the Production of Liquid Crystal", June 30, 2005). Therefore, the carbonyl fluoride has a broad prospect as a most effective alternative for chemical vapor deposition (CVD) chamber cleaning gas such as perfluorocarbons and nitrogen trifluoride, which can be used for cleaning gas and etching gas for semiconductor manufacturing device, a fluorating gas and raw material of an organic compound, and the synthesis intermediates, a fluorinating agent, and used as a cleaning gas for semiconductor manufacturing device that requires a high-purity carbonyl fluoride.

The manufacturing process for the carbonyl fluoride in general can be broadly divided into the following four methods: 1) reacting carbon monoxide or carbon dioxide with a fluorinating agent such as a fluorine gas and silver difluoride; 2) reacting phosgene (COCl₂) with a fluorinating agent such as hydrogen fluoride, antimony trifluoride, arsenic trifluoride and sodium fluoride; 3) reacting trifluoromethane with oxygen gas; 4) reacting tetrafluoroethylene with oxygen gas.

The synthetic preparation of COF₂ has been introduced in several patents, but very few involve the purification of COF₂. COF₂ crude product gas manufactured by different manufacturing methods and different reaction conditions may often contain HCl, HF, COCl₂, CF₄, CO₂, CO, N₂ and O₂ in the air, and other impurities. At normal pressure (101.325kPa), the boiling point of COF₂ is -84.57 °C; the boiling point of HCl is -85 °C; the boiling point of HF is 19.52 °C; the boiling point of COCl₂ is 7.56 °C; the boiling point of CF₄ is -128.06 °C; the boiling point of CO₂ is -78.45 °C; the boiling point of CO is -191.45 °C; the boiling point of N₂ is -195.8 °C; the boiling point of O₂ is -182.98 °C. Among them, the boiling point of COF₂ is close to those of HCl and CO₂, making it difficult to separate them from each other.

For purification and separation of COF₂ and HCl, Chinese Patent CN200980139487 (Application Date: October 2, 2009) describes a method for separating COF₂ and HCl, comprising: mixing a mixture containing COF₂ and HCl with an organic solvent which has azeotropic relationship with HCl but not with COF₂, and performing rectification to separate COF₂. EP 0 854 335 discloses the separation and purification of perfluorocarbon compounds.

For purification and separation of COF₂ and CO₂, since the boiling points of them are very close, merely differ by 6 °C, and their physical and chemical properties and the molecular size are also relatively close, it is very difficult to separate by existing adsorption method, rectification method. In addition, COF₂ and CO₂ easily react with the alkaline substances, thus it is also difficult to separate them by neutralization.

### SUMMARY OF THE INVENTION

In the prior art, the carbonyl fluoride purity in COF₂ crude product gas is low, the high impurity gas content makes it more difficult to separate and purify to obtain the carbonyl fluoride. The present invention aims to provide a process for the purification of carbonyl fluoride. The carbonyl fluoride obtained by the purification method has advantages of high safety, high purity, and is more economical.

The objective of the present invention is achieved by the following technical means.

A process for the purification of carbonyl fluoride, in which the pressure involved are absolute pressure (or absolute intensity of pressure), comprising the following steps:

### Step 1: Preliminary purification by rectification

Light component removal treatment is performed on the COF₂ crude product gas to remove impurities with low boiling point such as CF₄, CO, N₂ and O₂. Heavy component removal treatment is performed on the COF₂ crude product gas to remove impurities with high boiling point such as HF and COCl₂. During the light component removal treatment, the temperature at the bottom of a purification device ranges from -112 °C to -48 °C, the pressure ranges from 0.01 MPa to 0.6 MPa, and the temperature at the top is 0.5 °C to 30 °C lower than that at the bottom. During the heavy component removal treatment, the temperature at the bottom of the purification device ranges from -81 °C to 80 °C, the pressure ranges from 0.01 to 0.6 MPa, and the temperature at the top is 0.5 °C to 30 °C lower than that at the bottom. After the preliminary purification by rectification, the preliminarily rectified mixed gas is obtained. The main ingredient of the preliminarily rectified mixed gas is COF₂, and it also contains CO₂ as well as a small amount of other purities.

Light component removal treatment and heavy component removal treatment are generally performed separately. For example, light component removal treatment is performed firstly and then heavy component removal treatment is performed. Alternatively, heavy component removal treatment is performed firstly and then light component removal treatment is performed. The present invention is not limited to the case that, light component removal treatment and heavy component removal treatment are performed by the same rectification device or by a plurality of rectification devices. A specific example involves that, light component removal treatment is performed firstly to remove impurities with low boiling point; then, preliminarily rectified mixed gas is obtained during the intermediate stage; finally, heavy component removal treatment is performed to remove impurities with high boiling point.

Wherein, the carbonyl fluoride crude product gas is COF₂ crude product gas obtained by the process for manufacturing COF₂ in the prior art. The main ingredient of the COF₂ crude product gas is COF₂, and it may also contain HCl, HF, COCl₂, CF₄, CO₂, CO, N₂ and O₂, and other impurities. The impurities with low boiling point are impurities with a boiling point that is lower than the boiling point of carbonyl chloride under the pressure of the light component removal treatment. The impurities with high boiling point are impurities with a boiling point that is higher than the boiling point of the carbonyl fluoride under the pressure of the heavy component removal treatment.

### Step 2: Secondary purification by rectification

Secondary purification by rectification is performed on the preliminarily rectified mixed gas obtained in step 1 as follows: the temperature at the bottom of the purification device ranges from -123 °C to -36 °C, the pressure ranges from 0.01 MPa to 1.03 MPa, and the temperature at the top is 0.2 °C to 45 °C lower than that at the bottom. Then, the purified gas is collected at the top of the purification device.

Preferably, the temperature at the bottom of the purification device ranges from -118 °C to -47 °C, the pressure ranges from 0.01 MPa to 0.67 MPa, and the temperature at the top is 0.5 °C to 30 °C lower than that at the bottom.

More preferably, the temperature at the bottom of the purification device ranges from -113 °C to -62 °C, the pressure ranges from 0.01 MPa to 0.35 MPa, and the temperature at the top is 0.5 °C to 15 °C lower than that at the bottom.

Preferably, the purified gas is collected at the top of the purification device with a flow rate of 0.05 m³/h to 10 m³/h.

After completion of step 2, a mixed impurity with higher content in impurities is obtained at the bottom of the purification device, such as the starting material for reaction, the exhaust gas of the product and the kettle residue produced after separation. The mixture impurities may be further subjected to post-treatment or recycle treatment after discharging from the purification device, and subjected to purification again as the COF₂ crude product gas in step 1, thereby to reduce the emission of exhaust gas.

The purification device used in the process for the purification of carbonyl fluoride according to the present invention is one that are able to realize rectification operation in the prior art. A preferred purification device is a rectification tower, which may comprise a filled rectification tower or a plate rectification tower; when the rectification tower is more than one, they can be used in tandem. When a plurality of rectification towers are used in tandem, the liquid mass in the rectification still (reboiler) of the posterior rectification tower is transferred to the condenser of the anterior rectification tower through a transport pump device.

Rectification manner can be batch rectification manner or continuous rectification manner.

Preferably, the purification device is internally filled with a filler which is at least one selected from iron, stainless steel, copper, nickel, Monel, Hastelloy or polytetrafluoroethylene. For improving specific surface area of the filler, the filler type preferably is at least one selected from Pall rings, intalox saddle, conjugate ring or θ ring; the specific surface area of the filler is 10∼2500 m²/m³, the nominal size of the filler is ≤ 76mm, preferably ≤ 5mm, using random or structured way; the total height of the filler is preferably 100 mm∼45000 mm. When the purification device is a plate rectification tower without the use of fillers, the theoretical plate number of a plate rectification tower is 10∼500.

The purification device, in whole or in the surface part, is made of a material that is resistant to the etching of carbonyl fluoride, hydrogen fluoride and hydrofluoric acid. The material is at least one selected from iron, stainless steel, Monel, Hastelloy, Ni-Cr alloy, Ni-Mo alloy, Ni-Cu alloy, nickel, copper or platinum, preferably the material is at least one of Monel, stainless steel SUS304, stainless steel SUS316 or nickel.

The use of the carbonyl fluoride obtained by the process for the purification of carbonyl fluoride according to the present invention is not particularly limited, but is preferably used, for example, as the cleaning gas and the etching gas for semiconductor manufacturing device; a fluorinating agent for organic synthesis, raw materials, intermediates and in various other fields. Among them, the purified carbonyl fluoride due to its high purity is particularly suitable for the cleaning gas and the etching gas for semiconductor manufacturing device. Etching and cleaning conditions may be plasma etching, gas phase etching, ion beam etching, microwave etching, reactive etching, etc., and the corresponding cleaning conditions. Carbonyl fluoride may be used alone, or in combination with other etching gas and cleaning gas as a mixture, wherein the other gases comprise nitrogen trifluoride (NF₃), carbon tetrafluoride (CF₄), hexafluoroethane (C₂F₆), octafluoropropane (C₃F₈), octafluorocyclobutane (C₄F₈) 1,3-butadiene, hydrogen fluoride (HF), hydrogen chloride (HCl), hydrogen bromide (HBr), chlorine gas (Cl₂), sulfur hexafluoride (SF₆), silicon tetrafluoride (SiF₄), chlorine trifluoride (ClF₃), CHF₃, CClF₃, C₂ClF₅, BCl₃, HFCl₂, fluorine gas (F₂), etc., and a mixed gas of the gases above with an inert gas, a dilution gas (such as He, N₂, Ar, O₂, H₂, etc.), the mixing ratio and the amount is not limited and may be suitably selected according to the use.

### Advantageous Effects

The present invention provides a process for the purification of carbonyl fluoride, which comprises: COF₂ crude product gas is purified by rectification twice under suitable system temperature and pressure condition, respectively. The purity of carbonyl fluoride in the purified gas is ≥99% or even higher. In particular, the content of the CO₂ impurities is greatly reduced, less than 1000 ppm or even lower. The purification process according to the present invention is particularly suitable for COF₂ crude product gas comprising relatively high content of CO₂. The purification process can effectively separate COF₂ and CO₂, and obtain COF₂ of higher purity in a safer and more economical way.

### DESCRIPTION OF THE DRAWINGS

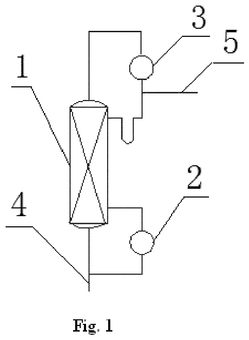

FIG. 1 is a schematic view of the structure of the purification device in the example, in which:
1-rectification column; 2-reboiler; 3-condenser; 4-inlet pipe; 5-product taking-out pipe

### DETAILED EMBODIMENTS

Hereinafter, some non-limiting examples of specific embodiments are provided to explain the present invention in more detail, but the present invention is not limited to the following examples. Contents described in the examples and the specification are merely illustrative of the principles of the present invention. In other words, the following description is only part of the preferred examples of the present invention, which is not intended to limit the scope of the present invention. Various variations, improvements and modifications will be apparent to those ordinary skilled technicians in the art without departing from the spirit, principle and scope of the present invention. The additional modification can be present alone or in any combination. Moreover, all such alterations, improvements and modifications are intended to be included within the protection scope claimed by the present invention.

In the following Examples 1 to 10:
All the pressures are absolute pressure.
The test method for the obtained purified gas is as follows:
   The gas is introduced into a gas chromatography - mass spectrometry (GC-MS) (Model GC-2014, Shimadzu Corporation, Japan) and Fourier transformation infrared spectroscopy (FT-IR) (Model Nicolet 6700) to analyze the composition of the gas. The main component of the gas is carbonyl fluoride, as determined by GC-MS and FT-IR. The purity and yield of the carbonyl fluoride is calculated based on the integrated area of the carbonyl fluoride in the results of gas chromatography.

In the gas chromatography assay, He gas is used as a carrier gas; a TCD detector is used; the flow rate of He carrier gas is 100 mL/min; the column temperature is 40 °C; the inlet temperature is 100 °C; the temperature of the TCD is 100 °C; the maximum peak of the gas chromatography is the peak of carbonyl fluoride.

### Example 1

The purification device used in this example is the rectification tower as shown in Figure 1, wherein the rectification tower comprises a reboiler 2, a rectification column 1, a condenser 3, an inlet pipe 4 and a product taking-out pipe 5. Wherein, the reboiler 2, the rectification column 1 and the condenser 3 are sequentially arranged from the bottom up, the inlet pipe 4 is in communication with the bottom of the reboiler 2 and the bottom of the rectification column 1 of the rectification tower. The top of the reboiler 2 of the rectification tower is in communication with the lower part of the rectification column 1. The top of the rectification column 1 is in communication with the top of the condenser 3. The bottom of the condenser 3 is in partial communication with the upper part of the rectification column 1. The product taking-out pipe 5 is located between the bottom of the condenser 3 and the top of the rectification column 1. The inlet pipe 4 is used for feeding, and the product taking-out pipe 5 is used for taking out the product after purification. The condenser 3 is externally equipped with a cooling jacket, and the reboiler 2 is externally equipped with a cooling jacket and a heating device. The two rectification towers as shown in Figure 1 are connected in tandem via the product taking-out pipe 5 and the inlet pipe 4, for use in the preliminary purification by rectification of step 1 and the secondary purification by rectification of step 2, respectively. The two rectification towers connect in tandem via pipes. In other words, impurities with low boiling point are removed by light component removal treatment through the former rectification tower. Then, the preliminarily rectified mixed gas is collected in the intermediate phase (which is transferred to the latter rectification tower). Finally, the impurities with high boiling point are removed by heavy component removal treatment. A secondary purification by rectification is realized in the latter rectification tower, thereby to obtain a carbonyl fluoride product with high purity.

During the operation of the rectification tower, the cooling jacket of the reboiler 2 was cooled by a cooling medium. The COF₂ crude product gas was fed to the reboiler 2 of the rectification tower from the inlet pipe 4 of the rectification tower. The temperature inside the column was controlled to continuously increase from top to bottom. The volatile light components with low boiling point relatively diffused from the liquid phase to the gas phase. During the flow of gas phase from the bottom to the top, the temperature was continuously reduced, and thus the heavy component with high boiling point and relatively low volatility was relatively diffused to the liquid phase, while the heat transfered from the gas phase to the liquid phase. Then, cooling was performed through the condenser 3 at the top of the column. After repeated continuously heat and mass transfer between the gas and liquid in the rectification tower 1 filled with fillers, the separation process in which the light components were accumulated with high concentration in the condenser 3 at the top of the column, and the heavy components were accumulated with high concentration in the reboiler 2 at the bottom of the column, is finally realized, thereby to realize the operation of purification by rectification. Finally, the purified gas products were taken out from the product taking-out pipe 5, thereby to obtain the rectified gas product.

Each portion of the rectification tower is made of nickel. The rectification column 1 has a diameter of 100 mm, a height of 3500 mm. The filler is filled in the rectification column 1 of the rectification tower, and the filler is a nickel-based θ ring filler with a nominal size of 5 mm (nickel purity, 99.5%). The total filling height of the filler is 1000 mm, and the specific surface area of the filler is 350 m²/m³.

COF₂ crude product gas is purified by entering the rectification tower through the inlet pipe 4 of the rectification tower. The specific composition of the COF₂ crude product gas and the volume percentage of each component are shown in Table 1.

### Step 1: Preliminary purification by rectification

In the light component removal treatment, the temperature of the reboiler 2 of the rectification tower was -112 °C, the pressure was 0.01 MPa, and the temperature of the condenser 3 was 5 °C lower than that of the reboiler 2. Impurities with low boiling point were accumulated at the condenser 3 at the top of the tower. The impurities with low boiling point accumulated at the condenser 3 at the top of the tower were removed by vacuation. In the heavy component removal treatment, the temperature of the reboiler 2 of the rectification tower was -81 °C, the pressure was 0.01 MPa, and the temperature of the condenser 3 was 5 °C lower than that of the reboiler 2. Impurities with high boiling point were accumulated at the reboiler 2 at the bottom of the tower. The purified product was taken out from the product taking-out pipe 5 at the top of the tower. Then, the impurities with high boiling point accumulated at the reboiler 2 at the bottom of the tower were removed by vacuation, thereby to obtain purified product, i.e., preliminarily rectified mixed gas.

### Step 2: Secondary purification by rectification

The preliminarily rectified mixed gas obtained in step 1 was introduced into another rectification tower that is connected in tandem with said rectification tower to perform a secondary purification by rectification as follows: the temperature of the reboiler 2 of the rectification tower is -123 °C, the pressure is 0.01 MPa, and the temperature of the condenser 3 is 30 °C lower than that of the reboiler 2. The purified gas is collected by product taking-out pipe 5 with a flow rate of 0.15 m³/h. Wherein, the impurities with low boiling point are removed by light component removal treatment. Then, the preliminarily rectified mixed gas is collected in the intermediate phase (which is transferred to the latter rectification tower), which can be directly transferred to a secondary rectification tower via a pipe. The composition of the impurities as well as the type and content of each component after the secondary purification by rectification is listed in Table 1.

The composition of the purified gas and the volume of each component by volume were tested. The test results are shown in Table 1. As can be seen, COF₂ purity> 99.9%, CO₂ impurity content <900 ppm.

**Table 1**

| Serial No. | Name of the components of the gas | Content of the gas before purification | Content of the gas after the purification |
|---|---|---|---|
| 1 | COF₂ | >90% | >99.9% |
| 2 | N₂ | <8% | <10 ppm |
| 3 | O₂ + Ar | <1% | <10 ppm |
| 4 | CF₄ | <1000 ppm | <10 ppm |
| 5 | CO₂ | <2500 ppm | <900 ppm |
| 6 | CO | <1000 ppm | <10 ppm |
| 7 | COCl₂ | undetected | undetected |
| 8 | HCl | undetected | undetected |
| 9 | HF | <1000 ppm | <10 ppm |
| 10 | Other impurities | <1000 ppm | <10 ppm |

### Example 2

The filler in the purification device used in this example has a specific surface area of 2500 m²/m³, others conditions are the same with example 1.

COF₂ crude product gas is purified by entering the rectification tower through the inlet pipe 4 of the rectification tower. The specific composition of the COF₂ crude product gas and the volume percentage of each component are shown in Table 2.

### Step 1: Preliminary purification by rectification

In the light component removal treatment, the temperature of the reboiler 2 of the rectification tower was -48 °C, the pressure was 0.6 MPa, and the temperature of the condenser 3 was 0.5 °C lower than that of the reboiler 2. Impurities with low boiling point were accumulated at the condenser 3 at the top of the tower. The impurities with low boiling point accumulated at the condenser 3 at the top of the tower were removed by vacuation. In the heavy component removal treatment, the temperature of the reboiler 2 of the rectification tower was 80 °C, the pressure was 0.6 MPa, and the temperature of the condenser 3 was 0.5 °C lower than that of the reboiler 2. Impurities with high boiling point were accumulated at the reboiler 2 at the bottom of the tower. The purified product was taken out from the product taking-out pipe 5 at the top of the tower. Then, the impurities with high boiling point accumulated at the reboiler 2 at the bottom of the column were removed by vacuation, thereby to obtain purified product, i.e., preliminarily rectified mixed gas.

### Step 2: Secondary purification by rectification

The preliminarily rectified mixed gas obtained in step 1 was introduced into another rectification tower that is connected in tandem with said rectification tower to perform a secondary purification by rectification as follows: the temperature of the reboiler 2 of the rectification tower is -36 °C, the pressure is 1.03 MPa, and the temperature of the condenser 3 is 45 °C lower than that of the reboiler 2. The purified gas is collected by product taking-out pipe 5 with a flow rate of 0.15 m³/h. Wherein, the impurities with low boiling point are removed by light component removal treatment. Then, the preliminarily rectified mixed gas is collected in the intermediate phase (which is transferred to the latter rectification tower), which can be transferred to a secondary rectification tower via a pipe. The composition of the impurities as well as the type and content of each component after the secondary purification by rectification is listed in Table 2.

The composition of the purified gas and the volume of each component by volume were tested. The test results are shown in Table 2. As can be seen, COF₂ purity> 99.9%, CO₂ impurity content <900 ppm.

**Table 2**

| Serial No. | Name of the components of the gas | Content of the gas before purification | Content of the gas after the purification |
|---|---|---|---|
| 1 | COF₂ | >90% | >99.9% |
| 2 | N₂ | <8% | <10 ppm |
| 3 | O₂ + Ar | <1% | <10 ppm |
| 4 | CF₄ | <1000 ppm | <10 ppm |
| 5 | CO₂ | <2500 ppm | <900 ppm |
| 6 | CO | <1000 ppm | <10 ppm |
| 7 | COCl₂ | undetected | undetected |
| 8 | HCl | undetected | undetected |
| 9 | HF | <1000 ppm | <10 ppm |
| 10 | Other impurities | <1000 ppm | <10 ppm |

### Example 3

The filler in the purification device used in this example has a specific surface area of 10 m²/m³. Others conditions are the same with example 1.

COF₂ crude product gas is purified by entering the rectification tower through the inlet pipe 4 of the rectification tower. The specific composition of the COF₂ crude product gas and the volume percentage of each component are shown in Table 3.

### Step 1: Preliminary purification by rectification

In the light component removal treatment, the temperature of the reboiler 2 of the rectification tower was -84 °C, the pressure was 0.1 MPa, and the temperature of the condenser 3 was 30 °C lower than that of the reboiler 2. Impurities with low boiling point were accumulated at the condenser 3 at the top of the tower. The impurities with low boiling point accumulated at the condenser 3 at the top of the tower were removed by vacuation. In the heavy component removal treatment, the temperature of the reboiler 2 of the rectification tower was 19 °C, the pressure was 0.1 MPa, and the temperature of the condenser 3 was 30 °C lower than that of the reboiler 2. Impurities with high boiling point were accumulated at the reboiler 2 at the bottom of the tower. The purified product was taken out from the product taking-out pipe 5 at the top of the tower. Then, the impurities with high boiling point accumulated at the reboiler 2 at the bottom of the tower were removed by vacuation, thereby to obtain purified product, i.e., preliminarily rectified mixed gas.

### Step 2: Secondary purification by rectification

The preliminarily rectified mixed gas obtained in step 1 was introduced into another rectification tower that is connected in tandem with said rectification tower to perform a secondary purification by rectification as follows: the temperature of the reboiler 2 of the rectification tower is -118 °C, the pressure is 0.01 MPa, and the temperature of the condenser 3 is 15 °C lower than that of the reboiler 2. The purified gas is collected by product taking-out pipe 5 with a flow rate of 0.05 m³/h. Wherein, the impurities with low boiling point are removed by light component removal treatment. Then, the preliminarily rectified mixed gas is collected in the intermediate phase (which is transferred to the latter rectification tower), which can be transferred to a secondary rectification tower via a pipe. The composition of the impurities as well as the type and content of each component after the secondary purification by rectification is listed in Table 3.

The composition of the purified gas and the volume of each component by volume were tested. The test results are shown in Table 3. As can be seen, COF₂ purity> 99.9%, CO₂ impurity content <900 ppm.

**Table 3**

| Serial No. | Name of the components of the gas | Content of the gas before purification | Content of the gas after the purification |
|---|---|---|---|
| 1 | COF₂ | >90% | >99.9% |
| 2 | N₂ | <8% | <10 ppm |
| 3 | O₂ + Ar | <1% | <10 ppm |
| 4 | CF₄ | <1000 ppm | <10 ppm |
| 5 | CO₂ | <2500 ppm | <900 ppm |
| 6 | CO | <1000 ppm | <10 ppm |
| 7 | COCl₂ | undetected | undetected |
| 8 | HCl | undetected | undetected |
| 9 | HF | <1000 ppm | <10 ppm |
| 10 | Other impurities | <1000 ppm | <10 ppm |

### Example 4

The filler in the purification device used in this example has a nominal size of 76 mm, and a total filling height of 100 mm. Others conditions are the same with example 1.

COF₂ crude product gas is purified by entering the rectification tower through the inlet pipe 4 of the rectification tower. The specific composition of the COF₂ crude product gas and the volume percentage of each component are shown in Table 4.

### Step 1: Preliminary purification by rectification

In the light component removal treatment, the temperature of the reboiler 2 of the rectification tower was -78 °C, the pressure was 0.15 MPa, and the temperature of the condenser 3 was 4 °C lower than that of the reboiler 2. Impurities with low boiling point were accumulated at the condenser 3 at the top of the tower. The impurities with low boiling point accumulated at the condenser 3 at the top of the tower were removed by vacuation. In the heavy component removal treatment, the temperature of the reboiler 2 of the rectification tower was 32 °C, the pressure was 0.15 MPa, and the temperature of the condenser 3 was 4 °C lower than that of the reboiler 2. Impurities with high boiling point were accumulated at the reboiler 2 at the bottom of the tower. The purified product was taken out from the product taking-out pipe 5 at the top of the tower. Then, the impurities with high boiling point accumulated at the reboiler 2 at the bottom of the tower were removed by vacuation, thereby to obtain purified product, i.e., preliminarily rectified mixed gas.

### Step 2: Secondary purification by rectification

The preliminarily rectified mixed gas obtained in step 1 was introduced into another rectification tower that is connected in tandem with said rectification tower to perform a secondary purification by rectification as follows: the temperature of the reboiler 2 of the rectification tower is -47 °C, the pressure is 0.67 MPa, and the temperature of the condenser 3 is 1 °C lower than that of the reboiler 2. The purified gas is collected by product taking-out pipe 5 with a flow rate of 10 m³/h. Wherein, the impurities with low boiling point are removed by light component removal treatment. Then, the preliminarily rectified mixed gas is collected in the intermediate phase (which is transferred to the latter rectification tower), which can be transferred to a secondary rectification tower via a pipe. The composition of the impurities as well as the type and content of each component after the secondary purification by rectification is listed in Table 4.

The composition of the purified gas and the volume of each component by volume were tested. The test results are shown in Table 4. As can be seen, COF₂ purity> 99%, CO₂ impurity content <1000 ppm.

**Table 4**

| Serial No. | Name of the components of the gas | Content of the gas before purification | Content of the gas after the purification |
|---|---|---|---|
| 1 | COF₂ | >90% | >99% |
| 2 | N₂ | <8% | <5000 ppm |
| 3 | O₂ + Ar | <1% | <2000 ppm |
| 4 | CF₄ | <1000 ppm | <200 ppm |
| 5 | CO₂ | <2500 ppm | <1000 ppm |
| 6 | CO | <1000 ppm | <200 ppm |
| 7 | COCl₂ | undetected | undetected |
| 8 | HCl | undetected | undetected |
| 9 | HF | <1000 ppm | <200 ppm |
| 10 | Other impurities | <1000 ppm | <200 ppm |

### Example 5

The purification device used in this example is 15 rectification towers in tandem. The filler in each rectification tower has a filling height of 3000 mm, and the total filling height is 45000 mm. Other conditions are the same with example 1. The 15 rectification towers are connected in tandem. The liquid mass in the reboiler 2 of the latter rectification tower is transferred to the condenser 3 of the former rectification tower through a transport pump device.

COF₂ crude product gas is purified by entering the rectification tower through the inlet pipe 4 of the rectification tower. The specific composition of the COF₂ crude product gas and the volume percentage of each component are shown in Table 5.

### Step 1: Preliminary purification by rectification

In the light component removal treatment, the temperature of the reboiler 2 of the rectification tower was -94 °C, the pressure was 0.05 MPa, and the temperature of the condenser 3 was 10 °C lower than that of the reboiler 2. Impurities with low boiling point were accumulated at the condenser 3 at the top of the tower. The impurities with low boiling point accumulated at the condenser 3 at the top of the tower were removed by vacuation. In the heavy component removal treatment, the temperature of the reboiler 2 of the rectification tower was 1 °C, the pressure was 0.05 MPa, and the temperature of the condenser 3 was 10 °C lower than that of the reboiler 2. Impurities with high boiling point were accumulated at the reboiler 2 at the bottom of the tower. The purified product was taken out from the product taking-out pipe 5 at the top of the tower. Then, the impurities with high boiling point accumulated at the reboiler 2 at the bottom of the tower were removed by vacuation, thereby to obtain purified product, i.e., preliminarily rectified mixed gas.

### Step 2: Secondary purification by rectification

The preliminarily rectified mixed gas obtained in step 1 was introduced into another rectification tower that is connected in tandem with said rectification tower to perform a secondary purification by rectification as follows: the temperature of the reboiler 2 of the rectification tower is -113 °C, and the pressure is 0.01 MPa; the temperature of the condenser 3 is 0.2 °C lower than that of the reboiler 2. The purified gas is collected by product taking-out pipe 5 with a flow rate of 0.15 m³/h. Wherein, the impurities with low boiling point are removed by light component removal treatment. Then, the preliminarily rectified mixed gas is collected in the intermediate phase (which is transferred to the latter rectification tower), which can be transferred to a secondary rectification tower via a pipe. The composition of the impurities as well as the type and content of each component after the secondary purification by rectification is listed in Table 5.

The composition of the purified gas and the volume of each component by volume were tested. The test results are shown in Table 5. As can be seen, COF₂ purity> 99.99%, CO₂ impurity content <50 ppm.

**Table 5**

| Serial No. | Name of the components of the gas | Content of the gas before purification | Content of the gas after the purification |
|---|---|---|---|
| 1 | COF₂ | >90% | >99.99% |
| 2 | N₂ | <8% | <10 ppm |
| 3 | O₂ + Ar | <1% | <10 ppm |
| 4 | CF₄ | <1000 ppm | <10 ppm |
| 5 | CO₂ | <2500 ppm | <50 ppm |
| 6 | CO | <1000 ppm | <100 ppm |
| 7 | COCl₂ | undetected | undetected |
| 8 | HCl | undetected | undetected |
| 9 | HF | <1000 ppm | <10 ppm |
| 10 | Other impurities | <1000 ppm | <10 ppm |

### Example 6

In the purification device used in this example, the rectification tower 1 has a height of 1500 mm; the filler has a total filling height of 1000 mm, and the filler has a specific surface area of 350 m²/m³. Other conditions are the same with example 1.

COF₂ crude product gas is purified by entering the rectification tower through the inlet pipe 4 of the rectification tower. The specific composition of the COF₂ crude product gas and the volume percentage of each component are shown in Table 6.

### Step 1: Preliminary purification by rectification

In the light component removal treatment, the temperature of the reboiler 2 of the rectification tower was -65 °C, the pressure was 0.05 MPa, and the temperature of the condenser 3 was 3 °C lower than that of the reboiler 2. Impurities with low boiling point were accumulated at the condenser 3 at the top of the tower. The impurities with low boiling point accumulated at the condenser 3 at the top of the tower were removed by vacuation. In the heavy component removal treatment, the temperature of the reboiler 2 of the rectification tower was 54 °C, the pressure was 0.05 MPa, and the temperature of the condenser 3 was 3 °C lower than that of the reboiler 2. Impurities with high boiling point were accumulated at the reboiler 2 at the bottom of the tower. The purified product was taken out from the product taking-out pipe 5 at the top of the tower. Then, the impurities with high boiling point accumulated at the reboiler 2 at the bottom of the tower were removed by vacuation, thereby to obtain purified product, i.e., preliminarily rectified mixed gas.

### Step 2: Secondary purification by rectification

The preliminarily rectified mixed gas obtained in step 1 was introduced into another rectification tower that is connected in tandem with said rectification tower to perform a secondary purification by rectification as follows: the temperature of the reboiler 2 of the rectification tower is -62 °C, and the pressure is 0.35 MPa, and the temperature of the condenser 3 is 4 °C lower than that of the reboiler 2. The purified gas is collected by product taking-out pipe 5 with a flow rate of 0.15 m³/h. Wherein, the impurities with low boiling point are removed by light component removal treatment. Then, the preliminarily rectified mixed gas is collected in the intermediate phase (which is transferred to the latter rectification tower), which can be transferred to a secondary rectification tower via a pipe. The composition of the impurities as well as the type and content of each component after the secondary purification by rectification is listed in Table 6.

The composition of the purified gas and the volume of each component by volume were tested. The test results are shown in Table 6. As can be seen, COF₂ purity> 99.9%, CO₂ impurity content <700 ppm.

**Table 6**

| Serial No. | Name of the components of the gas | Content of the gas before purification | Content of the gas after the purification |
|---|---|---|---|
| 1 | COF₂ | >90% | >99.9% |
| 2 | N₂ | <8% | <10 ppm |
| 3 | O₂ + Ar | <1% | <10 ppm |
| 4 | CF₄ | <1000 ppm | <10 ppm |
| 5 | CO₂ | <2500 ppm | <700 ppm |
| 6 | CO | <1000 ppm | <10 ppm |
| 7 | COCl₂ | <1000 ppm | <100 ppm |
| 8 | HCl | <1000 ppm | <100 ppm |
| 9 | HF | <1000 ppm | <10 ppm |
| 10 | Other impurities | <1000 ppm | <10 ppm |

### Example 7

The purification device used in this example does not use filler. Other conditions are the same with example 5.

The composition of the purified gas and the volume of each component by volume were tested. The test results are shown in Table 7. As can be seen, COF₂ purity> 99.9%, CO₂ impurity content <300 ppm.

**Table 7**

| Serial No. | Name of the components of the gas | Content of the gas before purification | Content of the gas after the purification |
|---|---|---|---|
| 1 | COF₂ | >90% | >99.9% |
| 2 | N₂ | <8% | <100 ppm |
| 3 | O₂ + Ar | <1% | <100 ppm |
| 4 | CF₄ | <1000 ppm | <100 ppm |
| 5 | CO₂ | <2500 ppm | <300ppm |
| 6 | CO | <1000 ppm | <200 ppm |
| 7 | COCl₂ | undetected | undetected |
| 8 | HCl | undetected | undetected |
| 9 | HF | <1000 ppm | <100 ppm |
| 10 | Other impurities | <1000 ppm | <100 ppm |

### Example 8

The purification device used in this example does not use filler. Other conditions are the same with example 6.

The composition of the purified gas and the volume of each component by volume were tested. The test results are shown in Table 8. As can be seen, COF₂ purity> 99.7%, CO₂ impurity content <1000 ppm.

**Table 8**

| Serial No. | Name of the components of the gas | Content of the gas before purification | Content of the gas after the purification |
|---|---|---|---|
| 1 | COF₂ | >90% | >99.7% |
| 2 | N₂ | <8% | <100 ppm |
| 3 | O₂ + Ar | <1% | <100 ppm |
| 4 | CF₄ | <1000 ppm | <100 ppm |
| 5 | CO₂ | <2500 ppm | <1000 ppm |
| 6 | CO | <1000 ppm | <100 ppm |
| 7 | COCl₂ | <1000 ppm | <500 ppm |
| 8 | HCl | <1000 ppm | <500 ppm |
| 9 | HF | <1000 ppm | <100 ppm |
| 10 | Other impurities | <1000 ppm | <100 ppm |

### Example 9

The purification device used in this example, which is a plate rectification tower, does not use filler. The tower has a theoretical plate number of 10 and a plate efficiency of 50%. The structure of the plate rectification tower is the same with that of the tower of example 1, except that the plate rectification tower uses plates instead of filler. Other conditions are the same with example 4.

The composition of the purified gas and the volume of each component by volume were tested. The test results are shown in Table 9. As can be seen, COF₂ purity> 99%, CO₂ impurity content <1000 ppm.

**Table 9**

| Serial No. | Name of the components of the gas | Content of the gas before purification | Content of the gas after the purification |
|---|---|---|---|
| 1 | COF₂ | >90% | >99% |
| 2 | N₂ | <8% | <5000 ppm |
| 3 | O₂ + Ar | <1% | <2000 ppm |
| 4 | CF₄ | <1000 ppm | <200 ppm |
| 5 | CO₂ | <2500 ppm | <1000 ppm |
| 6 | CO | <1000 ppm | <200 ppm |
| 7 | COCl₂ | undetected | undetected |
| 8 | HCl | undetected | undetected |
| 9 | HF | <1000 ppm | <200 ppm |
| 10 | Other impurities | <1000 ppm | <200 ppm |

### Example 10

The purification device used in this example, which is 20 plate rectification towers connected in tandem, does not use filler. The liquid mass in the reboiler 2 of the latter rectification tower is transferred to the condenser 3 of the former rectification tower through a transport pump device. Each rectification tower has a theoretical plate number of 25. Thus, the plate rectification tower has a theoretical plate number of 500 and a plate efficiency of 50%. The structure of the plate rectification tower is the same with that of the tower of example 1, except that the plate rectification tower uses plate instead of filler. Other conditions are the same with example 5.

The composition of the purified gas and the volume of each component by volume were tested. The test results are shown in Table 10. As can be seen, COF₂ purity> 99.99%, CO₂ impurity content <50 ppm.

**Table 10**

| Serial No. | Name of the components of the gas | Content of the gas before purification | Content of the gas after the purification |
|---|---|---|---|
| 1 | COF₂ | >90% | >99.99% |
| 2 | N₂ | <8% | <10 ppm |
| 3 | O₂ + Ar | <1% | <10 ppm |
| 4 | CF₄ | <1000 ppm | <10 ppm |
| 5 | CO₂ | <2500 ppm | <50 ppm |
| 6 | CO | <1000 ppm | <100 ppm |
| 7 | COCl₂ | undetected | undetected |
| 8 | HCl | undetected | undetected |
| 9 | HF | <1000 ppm | <10 ppm |
| 10 | Other impurities | <1000 ppm | <10 ppm |

## Claims

1. A process for the purification of carbonyl fluoride, **characterized in that** it comprises:
step 1. preliminary purification by rectification
performing light component removal treatment and heavy component removal treatment on COF₂ crude product gas to obtain a preliminarily rectified mixed gas; wherein during the light component removal treatment, the temperature at the bottom of a purification device ranges from -112 °C to -48 °C, the pressure ranges from 0.01 MPa to 0.6 MPa, and the temperature at the top is 0.5 °C to 30 °C lower than that at the bottom; and during the heavy component removal treatment, the temperature at the bottom of the purification device ranges from -81 °C to 80 °C, the pressure ranges from 0.01 MPa to 0.6 MPa, and the temperature at the top is 0.5 °C to 30 °C lower than that at the bottom; and thereby to obtain the preliminarily rectified mixed gas;
step 2. secondary purification by rectification
performing secondary purification by rectification on the preliminarily rectified mixed gas as follows: the temperature at the bottom of the purification device ranges from -123 °C to -36 °C, the pressure ranges from 0.01 MPa to 1.03 MPa, and the temperature at the top is 0.2 °C to 45 °C lower than that at the bottom, and thereby to obtain the purified gas;
wherein, the pressure in steps 1 and step 2 is absolute pressure.

2. The process for the purification of carbonyl fluoride according to claim 1, **characterized in that**, in step 2, the temperature at the bottom of the purification device ranges from -118 °C to -47 °C, the pressure at the bottom ranges from 0.01 MPa to 0.67 MPa, and the temperature at the top is 0.5 °C to 30 °C lower than that at the bottom.

3. The process for the purification of carbonyl fluoride according to claim 1, **characterized in that**, in step 2, the temperature at the bottom of the purification device ranges from -113 °C to -62 °C, the pressure ranges from 0.01 MPa to 0.35 MPa, and the temperature at the top is 0.5 °C to 15 °C lower than that at the bottom.

4. The process for the purification of carbonyl fluoride according to claim 1, **characterized in that** the purified gas is collected at the top of the purification device with a flow rate of 0.05 m³/h to 10 m³/h.

5. The process for the purification of carbonyl fluoride according to claim 1, **characterized in that** the material of the purification device, in whole or in the surface part, is at least one selected from iron, stainless steel, Monel, Hastelloy, Ni-Cr alloy, Ni-Mo alloy, Ni-Cu alloy, nickel, copper or platinum

6. The process for the purification of carbonyl fluoride according to claim 5, **characterized in that** the material is at least one of Monel, stainless steel SUS304, stainless steel SUS316 or nickel.

7. The process for the purification of carbonyl fluoride according to claim 1, **characterized in that** the rectification tower is a filled rectification tower or a plate rectification tower, and the rectification manner is batch rectification manner or continuous rectification manner.

8. The process for the purification of carbonyl fluoride according to claim 7, **characterized in that** the plate rectification tower has a theoretical plate number of 10 to 500.

9. The process for the purification of carbonyl fluoride according to any one of claims 1-7, **characterized in that** the purification device is internally filled with a filler, and the filler is at least one selected from iron, stainless steel, copper, nickel, Monel, Hastelloy or polytetrafluorethylene; and the filler has a specific surface area of 10 to 2500 m²/m³.

10. The process for the purification of carbonyl fluoride according to claim 9, **characterized in that** the filler is at least one of Pall ring, intalox saddle ring, conjugate ring or θ ring; and the filler has a nominal size of ≤ 76mm.

11. The process for the purification of carbonyl fluoride according to claim 10, **characterized in that** the filler has a nominal size of ≤ 5mm.

12. The process for the purification of carbonyl fluoride according to claim 9, **characterized in that** the filler has a filling height of 100 mm to 45000 mm.

## Patentansprüche

1. Ein Carbonylfluoridreinigungsverfahren, **dadurch gekennzeichnet dass** es Folgendes umfasst:
- Schritt 1. Vorläufige Reinigung durch Rektifikation Durchführung der Behandlung zur Entfernung von leichten Komponenten und der Behandlung zur Entfernung von schweren Komponenten bei COF₂ rohem Produktgas um ein vorläufig rektifiziertes Mischgas zu erhalten;
▪ wobei während der Behandlung zur Entfernung von leichten Komponenten, die Temperatur am unteren Teil einer Reinigungsvorrichtung im Bereich von -112°C bis -48°C liegt, der Druck im Bereich von 0,01 MPa bis 0,6 MPa liegt, und die Temperatur am oberen Teil von 0,5°C bis 30°C niedriger als jene am unteren Teil ist;
▪ und während der Behandlung zur Entfernung von schweren Komponenten, die Temperatur am unteren Teil der Reinigungsvorrichtung im Bereich von -81°C bis 80°C liegt, der Druck im Bereich von 0,01 MPa bis 0,6 MPa liegt, und die Temperatur am oberen Bereich von 0,5°C bis 30°C niedriger als jene am unteren Teil ist;
damit das vorläufig rektifizierte Mischgas erhalten wird;
- Schritt 2. Nachreinigung durch Rektifikation
Durchführung der Nachreinigung durch Rektifikation des vorläufig rektifizierten Mischgases, die wie folgt ist:
▪ die Temperatur am unteren Teil der Reinigungs-vorrichtung liegt im Bereich von -123°C bis -36°C, der Druck liegt im Bereich von 0,01 MPa bis 1,03 MPa, und die Temperatur am oberen Teil ist von 0,2°C bis 45°C niedriger als jene am unteren Teil, und wodurch das gereinigte Gas erhalten wird;
▪ wobei der Druck in Schritt 1 und Schritt 2 ein absoluter Druck ist.

2. Das Carbonylfluoridreinigungsverfahren nach Anspruch 1, **dadurch gekennzeichnet dass** bei Schritt 2 die Temperatur am unteren Teil der Reinigungsvorrichtung im Bereich von -118°C bis -47°C liegt, der Druck im Bereich von 0,01 MPa bis 0,67 MPa liegt, und die Temperatur am oberen Teil von 0,5°C bis 30°C niedriger als jene am unteren Teil ist.

3. Das Carbonylfluoridreinigungsverfahren nach Anspruch 1, **dadurch gekennzeichnet dass** bei Schritt 2 die Temperatur am unteren Teil der Reinigungsvorrichtung im Bereich von -113°C bis -62°C liegt, der Druck im Bereich von 0,01 MPa bis 0,35 MPa liegt, und die Temperatur am oberen Teil von 0,5°C bis 15°C niedriger als jene am unteren Teil ist.

4. Das Carbonylfluoridreinigungsverfahren nach Anspruch 1, **dadurch gekennzeichnet dass** das gereinigte Gas am oberen Teil der Reinigungsvorrichtung mit einer Durchflussrate von 0,05 m³/h bis 10 m³/h gesammelt wird.

5. Das Carbonylfluoridreinigungsverfahren nach Anspruch 1, **dadurch gekennzeichnet dass** das Material der Reinigungsvorrichtung, in der Gesamtheit oder im oberen Teil, aus mindestens einem von Eisen, Edelstahl, Monel, Hastelloy, Ni-Cr-Legierung, Ni-Mo-Legierung, Ni-Cu-Legierung, Nickel, Kupfer oder Platin ausgewählt ist.

6. Das Carbonylfluoridreinigungsverfahren nach Anspruch 5, **dadurch gekennzeichnet dass** das Material mindestens eines von Monel, Edelstahl SUS304, Edelstahl SUS316 oder Nickel ist.

7. Das Carbonylfluoridreinigungsverfahren nach Anspruch 1, **dadurch gekennzeichnet dass** die Rektifikationskolonne eine Packungsrektifikationskolonne oder eine vielbödige Rektifikationskolonne ist, und die Rektifikation eine Stufenrektifikation (Batch-Rektifikation) oder eine kontinuierliche Rektifikation ist.

8. Das Carbonylfluoridreinigungsverfahren nach Anspruch 7, **dadurch gekennzeichnet dass** die Platten-Rektifikationskolonne eine theoretische Bodenanzahl von 10 bis 500 aufweist.

9. Das Carbonylfluoridreinigungsverfahren nach einem der Ansprüche 1 bis 7, **dadurch gekennzeichnet dass** die Reinigungsvorrichtung im Inneren mit einer Packung gefüllt ist und die Packung aus mindestens einem von Eisen, Edelstahl, Kupfer, Nickel, Monel, Hastelloy oder Polytetrafluorethylen Materialen ausgewählt ist, und die Packung eine spezifische Oberfläche von 10 bis 2500 m²/m³ aufweist.

10. Das Carbonylfluoridreinigungsverfahren nach Anspruch 9, **dadurch gekennzeichnet dass** die Packung mindestens eines von Pall-Ring, Intalox-Sattelring, Konjugat-Ring oder O-Ring ist, und das Packungsmaterial eine nominale Größe ≤ 76 mm aufweist.

11. Das Carbonylfluoridreinigungsverfahren nach Anspruch 10, **dadurch gekennzeichnet dass** das Packungsmaterial eine nominale Größen ≤ 5 mm aufweist.

12. Das Carbonylfluoridreinigungsverfahren nach Anspruch 9, **dadurch gekennzeichnet dass** die Packung eine Packungshöhe von 100 mm bis 45000 mm aufweist.

## Revendications

1. Procédé de purification de fluorure de carbonyle, **caractérisé en ce qu'**il comprend :
étape 1. purification préliminaire par rectification
mise en oeuvre d'un traitement d'élimination des composés légers et d'un traitement d'élimination des composés lourds sur un produit brut gazeux de COF₂ pour obtenir un gaz mixte ayant subi une rectification préliminaire ; dans lequel pendant le traitement d'élimination des composés légers, la température au fond du dispositif de purification est dans la plage de -112 à -48 °C, la pression dans la plage de 0,01 à 0,6 MPa, et la température au sommet de 0,5 à 30 °C inférieure à celle au fond ; et pendant le traitement d'élimination des composés lourds, la température au fond du dispositif de purification est dans la plage de -81 à 80 °C, la pression dans la plage de 0,01 à 0,6 MPa, et la température au sommet de 0,5 à 30 °C inférieure à celle au fond ; pour obtenir ainsi un gaz mixte ayant subi une rectification préliminaire ;
étape 2. purification secondaire par rectification
mise en oeuvre d'une purification secondaire par rectification du gaz mixte ayant subi une rectification préliminaire, comme suit : la température au fond du dispositif de purification est dans la plage de -123 à -36 °C, la pression dans la plage de 0,01 à 1,03 MPa, et la température au sommet de 0,2 à 45 °C inférieure à celle au fond, pour obtenir ainsi le gaz purifié ;
dans lequel, les pressions dans les étapes 1 et 2 sont des pressions absolues.

2. Procédé de purification de fluorure de carbonyle selon la revendication 1, **caractérisé en ce que**, dans l'étape 2, la température au fond du dispositif de purification est dans la plage de -118 à -47 °C, la pression au fond dans la plage de 0,01 à 0,67 MPa, et la température au sommet de 0,5 à 30 °C inférieure à celle au fond.

3. Procédé de purification de fluorure de carbonyle selon la revendication 1, **caractérisé en ce que**, dans l'étape 2, la température au fond du dispositif de purification est dans la plage de -113 à -62 °C, la pression dans la plage de 0,01 à 0,35 MPa, et la température au sommet de 0,5 à 15 °C inférieure à celle au fond.

4. Procédé de purification de fluorure de carbonyle selon la revendication 1, **caractérisé en ce que** le gaz purifié est collecté au sommet du dispositif de purification à un débit de 0,05 m³/h à 10 m³/h.

5. Procédé de purification de fluorure de carbonyle selon la revendication 1, **caractérisé en ce que** le matériau du dispositif de purification, dans son ensemble ou sur sa partie superficielle, est au moins un matériau choisi parmi le fer, l'acier inoxydable, le Monel, l'Hastelloy, l'alliage Ni-Cr, l'alliage Ni-Mo, l'alliage Ni-Cu, le nickel, le cuivre ou le platine.

6. Procédé de purification de fluorure de carbonyle selon la revendication 5, **caractérisé en ce que** le matériau est au moins le Monel et/ou l'acier inoxydable SUS304 et/ou l'acier inoxydable SUS316 ou le nickel.

7. Procédé de purification de fluorure de carbonyle selon la revendication 1, **caractérisé en ce que** la tour de rectification est une tour de rectification garnie ou une tour de rectification à plateaux, et le mode de rectification est le mode rectification discontinue ou le mode rectification continue.

8. Procédé de purification de fluorure de carbonyle selon la revendication 7, **caractérisé en ce que** la tour de rectification à plateaux comporte un nombre de plateaux théorique de 10 à 500.

9. Procédé de purification de fluorure de carbonyle selon l'une quelconque des revendications 1 à 7, **caractérisé en ce que** le dispositif de purification est garni intérieurement avec un matériau de garnissage, et le matériau de garnissage est au moins choisi parmi le fer, l'acier inoxydable, le cuivre, le nickel, le Monel, l'Hastelloy ou le polytétrafluoroéthylène ; et le matériau de garnissage a une aire spécifique de 10 à 2 500 m²/m³.

10. Procédé de purification de fluorure de carbonyle selon la revendication 9, **caractérisé en ce que** le matériau de garnissage est au moins constitué par des anneaux de Pall et/ou des selles de Intalox et/ou des anneaux conjugués et/ou des anneaux θ, et le matériau de garnissage a une taille nominale ≤ 76 mm.

11. Procédé de purification de fluorure de carbonyle selon la revendication 10, **caractérisé en ce que** le matériau de garnissage a une taille nominale ≤ 5 mm.

12. Procédé de purification de fluorure de carbonyle selon la revendication 9, **caractérisé en ce que** le matériau de garnissage a une hauteur de garnissage de 100 mm à 45 000 mm.
